# EUROPÄISCHE PATENTSCHRIFT

(11) **EP 1 141 589 B1**
(45) Veröffentlichungstag und Bekanntmachung des Hinweises auf die Patenterteilung: **11.08.2004**
(21) Anmeldenummer: 99966863.5
(22) Anmeldetag: 15.12.1999
(51) Int. Cl.: F16H 61/00, B60K 41/22, B60K 41/26

(54) **SYSTEM ZUR EINSTELLUNG DER SPANNUNG DES UMSCHLINGUNGSTEILS EINES UMSCHLINGUNGSGETRIEBES**
SYSTEM FOR ADJUSTING THE TENSION OF A WRAPPED COMPONENT OF AN INFINITELY VARIABLE SPEED TRANSMISSION
SYSTEME PERMETTANT DE REGLER LA TENSION DE LA PARTIE ENROULEE D'UNE TRANSMISSION A VARIATION CONTINUE

(30) Priorität: 22.12.1998 DE 19859309; 22.06.1999 DE 19928292
(43) Veröffentlichungstag der Anmeldung: 10.10.2001
(73) Patentinhaber: ROBERT BOSCH GMBH, 70442 Stuttgart (DE)
(72) Erfinder: SENGER, Karl-Heinz, D-74369 Loechgau (DE); LUH, Joachim, D-74321 Bietigheim-Bissingen (DE); LUYCKX, Johan, B-3740 Bilzen (BE); PELDERS, Riné, NL-5391 BT Nuland (NL)
(86) Internationale Anmeldenummer: PCT/DE1999/003987
(87) Internationale Veröffentlichungsnummer: WO 2000/037832

(56) Entgegenhaltungen:
- EP-A- 0 412 711
- EP-A- 0 451 887
- DE-A- 19 622 108
- US-A- 5 211 083
- US-A- 5 259 272

## Beschreibung

### Stand der Technik

Die Erfindung betrifft ein System zur Einstellung der Spannung des Umschlingungsteils eines Umschlingungsgetriebes mit den Merkmalen des Anspruchs 1 bzw. 2, wobei die Merkmale des Oberbegriffs von Anspruch 2 aus der DE-A-196 22 108 als bekannt gelten können.

Bei einem weiteren beispielsweise aus der EP, A1, 0 451 887 bekannten System sind neben dem stufenlos in seiner Übersetzung verstellbaren Umschlingungsgetriebe weiterhin ein Fahrzeugmotor, ein durch eine Überbrückungskupplung überbrückbarer Drehmomentenwandler sowie Kupplungen für die Umschaltung zwischen vorwärts- und Rückwärtsfahrt im Antriebsstrang angeordnet. Diese Schrift betrifft auch die Einstellung der Spannung eines Umschlingungsteils in einem stufenlosen Umschlingungsgetriebe, bestehend aus dem Umschlingungsteil und Antriebs- und Abtriebskegelscheiben. Hierbei wird mit dem hydraulischen Druck in einer abtriebsseitigen Ölkammer die Spannung des Umschlingungsteils eingestellt.

Die Spannung des Umschlingungsteils ist dabei so einzustellen, daß der Wirkungsgrad des stufenlosen Umschlingungsgetriebes maximal ist. Es ist dabei einerseits zu verhindern, daß das Umschlingungsteil durch eine zu kleine Spannung durchrutscht und andererseits soll die Spannung des Umschlingungsteils nicht zu hoch sein, um hohe Verluste im stufenlosen Umschlingungsgetriebe zu vermeiden. Um beide Anforderungen in Einklang bringen zu können, muß das von der Antriebsseite auf die Abtriebsseite übertragene Drehmoment möglichst genau bekannt sein. Das zu übertragende Drehmoment an der Antriebsscheibe wird dabei hauptsächlich von dem Drehmoment des Fahrzeugmotors und dem Drehmomentenverstärkungsfaktor eines unter Umständen eingebauten Drehmomentenwandlers bestimmt. Eine Berücksichtigung der Betriebszustände der Kupplungen bei der Einstellung der Spannung des Umschlingungsteils findet nicht statt. Die Aufgabe der vorliegenden Erfindung besteht in der Optimierung der Anpassung der Bandspannung an die tatsächlichen Erfordernisse.

Diese Aufgabe wird durch die Merkmale der Ansprüche 1 bzw. 2 gelöst.

### Vorteile der Erfindung

Wie schon erwähnt, geht die Erfindung aus von einem System zur Einstellung der Spannung eines Umschlingungsteils eines, vorzugsweise in seiner Übersetzung stufenlos verstellbaren, Umschlingungsgetriebes. Das Umschlingungsgetriebe ist dabei zusammen mit einem Fahrzeugmotor an wenigstens einer, verschiedene Betriebszustände aufweisenden Kupplung in dem Antriebsstrang des Fahrzeugs angeordnet. Der Kern der Erfindung besteht darin, daß die Einstellung der Spannung des Umschlingungsteils wenigstens abhängig von dem Betriebszustand der Kupplung geschieht. Hierdurch wird eine sehr genaue Anpassung der Bandspannung an die tatsächlich erforderliche Drehmomentenübertragung gewährleistet.

In einer vorteilhaften Ausgestaltung der Erfindung ist vorgesehen, daß die Einstellung der Spannung durch die Einstellung eines hydraulischen Drucks geschieht. Die Einstellung des hydraulischen Drucks geschieht dann also abhängig von dem Betriebszustand der Kupplung. Hierbei ist insbesondere vorgesehen, daß das Umschlingungsgetriebe eine Antriebsseite und eine Abtriebsseite aufweist, die im wesentlichen die Form von Kegelscheiben besitzen. Als Umschlingungsteil ist wenigstens ein Band, vorzugsweise ein Schubgliederband oder ein Riemen oder eine Kette zwischen Scheibenpaaren, die die Antriebs- und die Abtriebsseite darstellen, eingespannt. Durch die Einstellung des hydraulischen Drucks wird der Anpreßdruck wenigstens einer Kegelscheibe gegen das Umschlingungsteil eingestellt.

In einer Ausführungsform der Erfindung ist eine Kupplung vorgesehen, die zur Einlegung des Vorwärtsgangs und des Rückwärtsgangs angesteuert wird. Insbesondere ist hierbei an eine Vorwärtskupplung und an eine Rückwärtskupplung gedacht. Weiterhin ist in dieser Ausführungsform zwischen dem Fahrzeugmotor und dem Umschlingungsgetriebe im Antriebsstrang ein drehmomentverstärkender Planetensatz angeordnet sein, der bei eingelegtem Rückwärtsgang in den Antriebsstrang geschaltet wird.

In einer anderen Ausführungsform der Erfindung ist im Antriebsstrang des Fahrzeugs ein Drehmomentenwandler angeordnet und als Kupplung ist eine Wandlerüberbrückungskupplung vorgesehen, wobei durch Schließen der Wandlerüberbrückungskupplung der Drehmomentenwandler überbrückt wird.

Die Einstellung der Spannung geschieht abhängig von einer ermittelten Momentengröße, die das am Eingang des Umschlingungsgetriebes wirkende Moment repräsentiert. Die Ermittlung dieser Momentengröße geschieht abhängig von dem Betriebszustand der Kupplung.

Dabei ist vorgesehen, daß eine den Schlupf des Drehmomentenwandlers repräsentierende Schlupfgröße und eine das Motorausgangsmoment repräsentierende Motormomentengröße ermittelt wird. Bei geöffneter Wandlerüberbrückungskupplung wird dann die Momentengröße, die das Getriebeeingangsmoment repräsentiert, durch eine erste Ermittlung wenigstens abhängig von der ermittelten Schlupfgröße ermittelt. Bei geschlossener Wandlerüberbrückungskupplung wird die Momentgröße durch eine zweite Ermittlung wenigstens abhängig von der ermittelten Motormomentengröße ermittelt. Dies bedeutet, daß der gewünschte Anpreßdruck und damit die Spannung des Umschlingungsteils abhängig von dem Betätigungszustand der Wandlerüberbrückungskupplung berechnet wird.

Die Kupplungen können als Betriebszustände wenigstens den geöffneten und den geschlossenen Zustand einnehmen, wobei vorzugsweise ein weiterer Betriebszustand während des Schließens der Kupplungen vorliegt.

In einer besonders vorteilhaften Ausgestaltung der Erfindung ist vorgesehen, daß die Spannung des Umschlingungsteils beziehungsweise der gewünschte Anpreßdruck abhängig von dem Betätigungsstand der Vorwärts- und Rückwärtskupplungen jeweils anders berechnet werden. Dabei ist vorzugsweise vorgesehen, daß die Spannung des Umschlingungsteils in Reaktion auf einer Schließen der Rückwärtskupplung erhöht oder verringert wird. Dies hat den Hintergrund, daß bei Einlegen des Rückwärtsgangs der drehmomentverstärkende oder drehmomentverringernde Planetensatz in den Antriebsstrang zugeschaltet wird, woraufhin der Anpreßdruck beziehungsweise die Spannung zur Vermeidung eines unzulässigen Schlupfes erhöht oder verringert werden sollte.

Bei offener Wandlerüberbrückungskupplung wird das Primärdrehmoment, also das Getriebeeingangsdrehmoment, entsprechend den physikalischen Gleichungen des Drehmomentenwandlers aus der Motor- und Turbinendrehzahl berechnet. Diese Berechnungsmethode ist genauer, da das vom Fahrzeugmotor zur Verfügung stehende Lastsignal oftmals große Ungenauigkeiten, beispielsweise durch nicht erfaßte Nebenaggregate und durch Reibung im Fahrzeugmotor, beinhaltet. Diese Ungenauigkeiten führen bei Systemen, die das Motormoment direkt zur Spannungsregelung benutzen, insbesondere bei Stillstand des Fahrzeugs, das heißt bei großer Verstärkung des Drehmomentenwandlers, zu erhöhten Ungenauigkeiten bei der Berechnung des Anpreßdrucks beziehungsweise der Spannung. Der Anpreßdruck beziehungsweise die Spannung ist aus diesem Grund beim Anfahren des Fahrzeugs aus dem Stand bei solchen Systemen zu hoch, wodurch unnötig viel Leistung im Getriebe umgesetzt wird.

Bei geschlossener Wandlerüberbrückungskupplung wird das Primärdrehmoment beziehungsweise das Getriebeeingangsdrehmoment aus dem Motorkennfeld berechnet, korrigiert um das Trägheitsmoment des Motors und um die Drehmomentaufnahme der Pumpe.

Besonders vorteilhaft ist es, während des Schließens der Wandlerüberbrückungskupplung als Momentengröße den Maximalwert aus der oben genannten ersten und zweiten Ermittlung auszuwählen. Dies bedeutet, daß bei Schließen der Wandlerüberbrückungskupplung gleitend zwischen den beiden Berechnungsverfahren für das Primärdrehmoment umgeschaltet wird, indem das größere berechnete Primärdrehmoment verwendet wird.

In einer weiteren vorteilhaften Ausgestaltung der Erfindung ist vorgesehen, daß während des Schließens der Kupplungen die Spannung des Umschlingungsteils und somit der Anpreßdruck gegenüber der Spannung beziehungsweise gegenüber dem Anpreßdruck im vorhergehenden Betriebszustand erhöht wird. Bei dieser Ausgestaltung der Erfindung, bei der während des Einschaltens der Kupplungen der Anpreßdruck beziehungsweise die Spannung erhöht wird, können mögliche Drehmomentstöße vom Umschlingungsteil ferngehalten werden. Dies kann bei Einschalten der Vorwärts- beziehungsweise Rückwärtskupplungen oder beim Schließen der Wandlerüberbrückungskupplung geschehen.

In einer weiteren vorteilhaften Ausgestaltung der Erfindung ist vorgesehen, daß die Einstellung der Spannung des Umschlingungsteils hydraulisch geschieht und eine durch den Fahrzeugmotor angetriebene hydraulische Pumpe vorgesehen ist. Die das Motorausgangsmoment repräsentierende Motormomentengröße wird in dieser Ausgestaltung abhängig von einer den Betriebszustand der Pumpe repräsentierenden Druckgröße ermittelt. Das bedeutet, daß bei der Berechnung des Primärdrehmoments, insbesondere bei geschlossener Wandlerkupplung, das von der Hydraulikpumpe aufgenommene Drehmoment berücksichtigt wird.

Die Einstellung der Spannung des Umschlingungsteils kann weiterhin abhängig davon geschehen, ob eine Verstellung der Übersetzung des Umschlingungsgetriebes zu größeren oder zu kleineren Übersetzungen geschieht. Hierbei ist insbesondere vorgesehen, daß die Spannung beziehungsweise der Anpreßdruck während einer Verstellung zu größeren Übersetzungen gegenüber der Einstellung einer im wesentlichen konstanten Übersetzung erhöht wird. Hierdurch ist es vorteilhafterweise möglich, schnellere Übersetzungsverstellungen zu größeren Übersetzungen hin zu erzielen und ein Bandrutschen durch einen zu niedrigen Primärdruck zu vermeiden.

In einer weiteren vorteilhaften Ausgestaltung ist vorgesehen, daß das Fahrzeug ein Antiblockierregelsystem und/oder ein Antriebsschlupfregelsystem und/oder ein Fahrstabilitätsregelsystem aufweist. Mittels dieser Regelsysteme werden im aktivierten Zustand dieser Regelsysteme die an den Fahrzeugrädern wirkenden Bremskräfte modifiziert. Die Einstellung der Spannung des Umschlingungsteils beziehungsweise die Einstellung des Anpreßdrucks geschieht in dieser Ausgestaltung der Erfindung weiterhin abhängig von der Aktivierung eines solchen Regelsystems. Insbesondere ist vorgesehen, daß bei Aktivierung solcher Regelsysteme der Anpreßdruck und damit die Spannung erhöht wird, um das Umschlingungsteil vor großen Drehmomentstößen zu schützen.

Weitere vorteilhafte Ausgestaltungen der Erfindung sind den Unteransprüchen zu entnehmen.

### Zeichnung

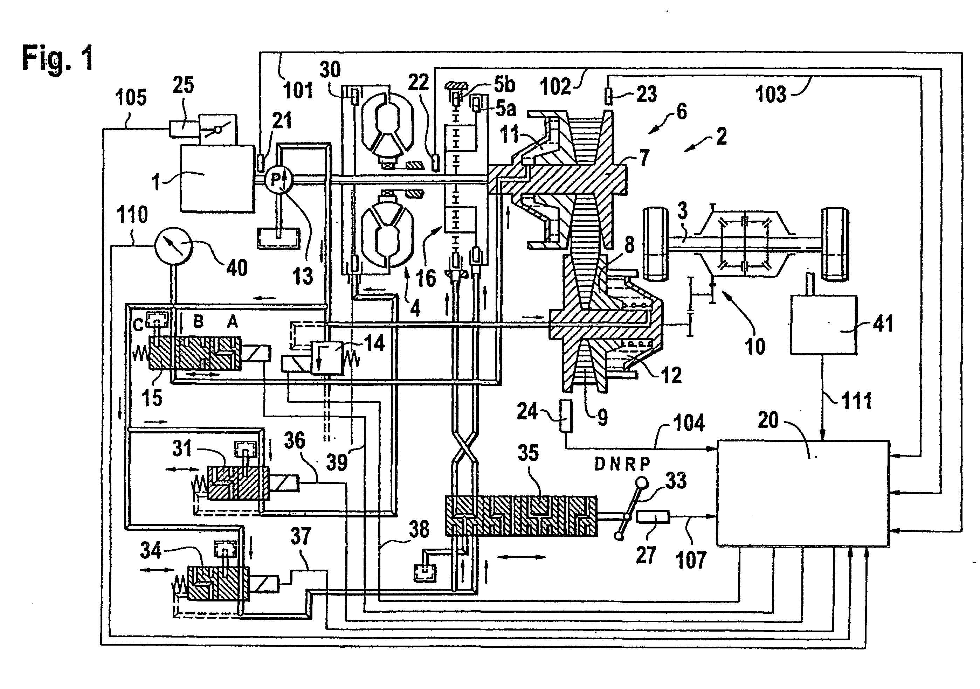

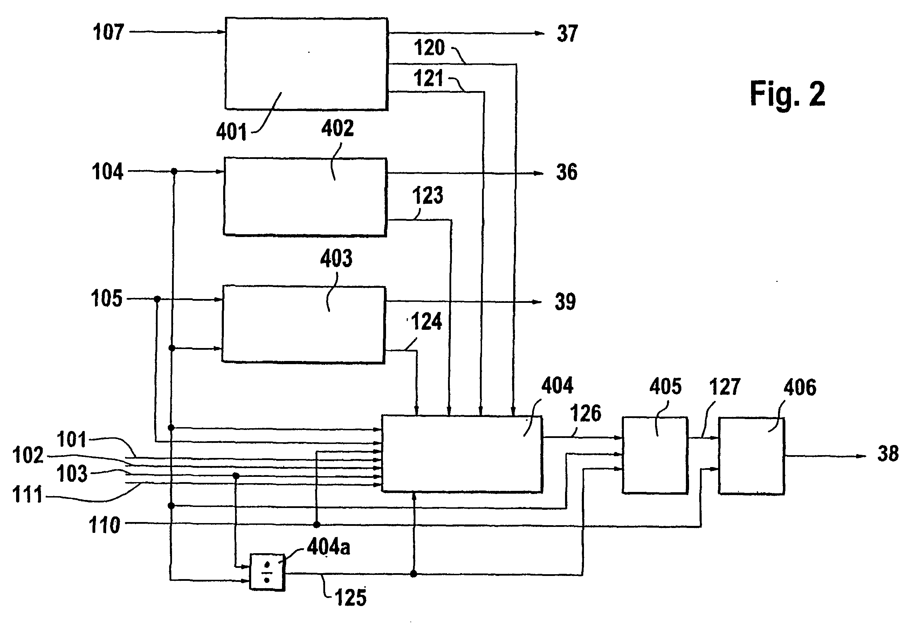

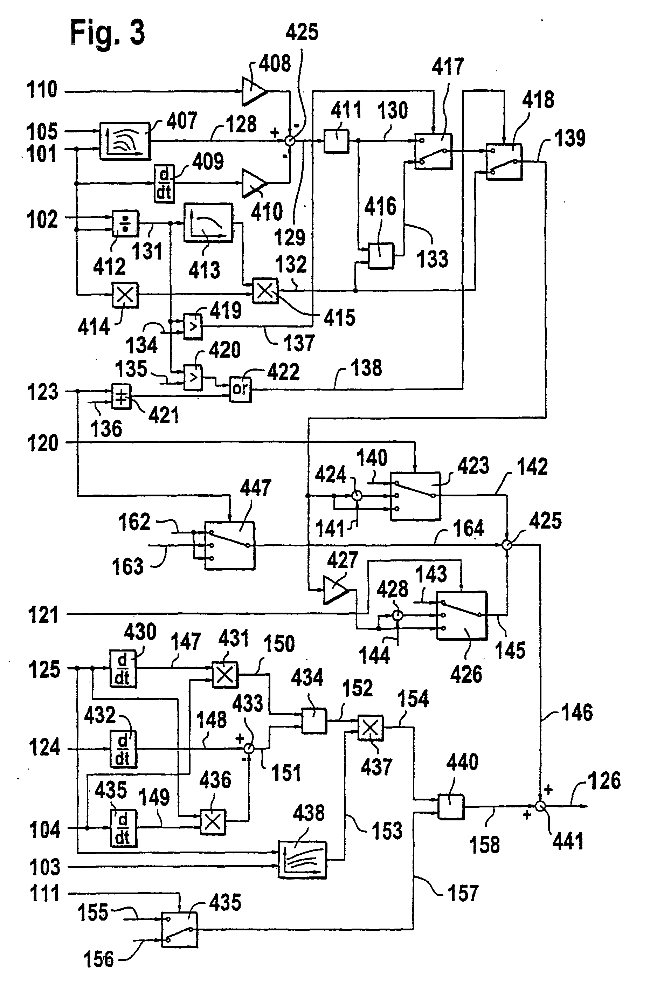

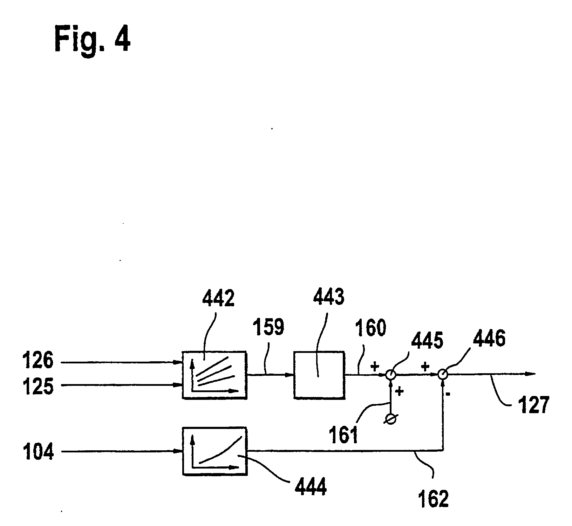

Die Figur 1 zeigt schematisch eine Übersicht über den Antriebsstrang des Fahrzeugs. Die Figur 2 zeigt anhand eines Blockschaltbildes ein Ausführungsbeispiel des erfindungsgemäßen Systems, während die Figuren 3 und 4 anhand von Blockschaltbildern die nähere Ausgestaltung einzelner Blöcke der Figur 2 darstellen.

### Ausführungsbeispiele

Anhand der im folgenden beschriebenen Ausführungsbeispiele soll die Erfindung näher erläutert werden.

Die Figur 1 zeigt ein stufenloses Umschlingungsgetriebe 2 in einem Kraftfahrzeug zur Kraftübertragung von Fahrzeugmotor 1 zu den Antriebswellen 3 der Räder. Der Antriebsstrang des Fahrzeugs weist weiterhin einen Drehmomentenwandler 4 mit einer Wandlerüberbrückungskupplung 30 und Kupplungen 5a und 5b für Umschaltungen zwischen Vorwärts- und Rückwärtsfahrt mit dem Planetengetriebesatz 16 auf. Der Planetengetriebesatz 16 ist dabei zwischen dem Motor 1 und dem Variator 6 angeordnet. Der Variator 6 besteht aus einem Antriebskegelscheibensatz 7 (primäre Seite) und einem Abtriebskegelscheibensatz 8 (sekundäre Seite), wobei mit Hilfe einer Kette oder eines Schubgliederbandes 9 (Umschlingungsteil) die Kraft von dem Antriebsscheibensatz 7 zum Abtriebsscheibensatz 8 übertragen wird.

Jeder Kegelscheibensatz besteht aus einer axial feststehenden und einer axial beweglichen Scheibe. Durch eine gezielte Variation der axial beweglichen Scheiben auf dem Antriebsscheibensatz 7 und dem Abtriebsscheibensatz 8 ändert sich die Übersetzung des Variators 6 von einer hohen Anfahrtübersetzung _{"}Low" bis zu einer niedrigen Übersetzung _{"}Overdrive".

Der Abtriebsscheibensatz 8 ist über ein Ausgleichsgetriebe 10 mit den Antriebswellen 3 der Räder verbunden.

Die axial beweglichen Kegelscheiben 7 und 8 sind hydraulisch verstellbar und besitzen dazu Ölkammern 11 und 12. Zur Druckölversorgung besitzt das Getriebe 2 eine Ölpumpe 13, die beispielsweise mit der Drehzahl des Verbrennungsmotors 1 läuft.

Weiterhin besitzt das Fahrzeug ein Antiblockier- und/oder ein Antriebsschlupfregel- und/oder ein Fahrstabilitätssystem 41, das die Bremskraft am Rad so verändern kann, daß ein Blockieren beziehungsweise Durchdrehen der Räder verhindert wird beziehungsweise die Fahrstabilität des Fahrzeugs erhöht wird.

In der anhand der Figur 1 gezeigten Ausführungsform wird der Druck in der abtriebsseitigen Ölkammer 12 mit Hilfe eines direkt gesteuerten Druckbegrenzungsventils 14 eingestellt. Dazu liefert das Steuergerät 20 ein Stellsignal 38 an das Ventil 14. Die Übersetzung des Variators 6 wird mit Hilfe eines direkt gesteuerten Proportionalventils 15 verändert, indem das Steuergerät 20 die Stellgröße 39 vorgibt.

Zum Betätigen der Kupplungen 5a und 5b wird mit Hilfe des Wählhebels 33 die Position des Handschaltventils 35 verändert. Dieses Handschaltventil 35 weist die Position P (Parkposition), R (Rückwärtsfahrtposition), N (Neutralposition) und D (Normal- beziehungsweise Vorwärtsfahrtposition) auf. Mit Hilfe des direkt gesteuerten Druckbegrenzungsventils 34 kann der Anpreßdruck der Kupplungen 5a und 5b eingestellt werden. Zu diesem Zweck liefert das Steuergerät 20 das Stellsignal 37. Das direkt gesteuerte Druckbegrenzungsventil 31 dient dem Schließen der Wandlerüberbrückungskupplung 30. Zum Schließen der Wandlerüberbrückungskupplung 30 wird vom Steuergerät 20 das Stellsignal 36 vorgegeben.

Die genaue Ausführung der elektrisch betätigbaren Ventile ist in der Figur 1 nur symbolisch dargestellt und kann anders wie in der Figur 1 dargestellt, beispielsweise mit Vorsteuerventilen und Hauptstufen, erfolgen.

Die Sensoren 21, 22, 23, 24, 25, 27 und 40 sind an das Steuergerät 20 angeschlossen. Zur Ermittlung eines Motordrehzahlsignals 101 existiert ein Sensor 21. Der Sensor 22 liefert ein Signal 102, das die Ausgangsdrehzahl beziehungsweise Abtriebsdrehzahl des Drehmomentenwandlers, die Turbinendrehzahl, repräsentiert. Der Sensor 23 liefert das Primärdrehzahlsignal 103 und der Sensor 24 das Sekundärdrehzahlsignal 104. Weiterhin ist der Sensor 25 zur Ermittlung eines Lastsignals 105 des Motors 1 vorhanden. Der Sensor 27 liefert das Wählhebelpositionssignal 107. Der Drucksensor 40 mißt den Druck in der abtriebsseitigen Ölkammer 12 und liefert das Drucksignal 110.

Weiterhin liefert das Antiblockier- beziehungsweise Antriebsschlupfregelsystem (ABS- beziehungsweise ABS/ASR-System) 41 ein Signal 111, welches anzeigt, ob das ABS- beziehungsweise ABS/ASR-System beziehungsweise Fahrstabilitätssystem (ESP) aktiv ist. Diese Systeme sind beispielsweise aktiv, wenn ein Blockieren der Räder verhindert wird oder durch einen aktiven Eingriff des ASR ein Durchdrehen der Räder verhindert wird oder durch einen aktiven Eingriff des ESP, beispielsweise durch ein radindividuelles Unter- oder Überbremsen einzelner Räder, die Fahrstabilität erhöht und ein Ausbrechen des Fahrzeugs verhindert wird.

Die Figur 2 zeigt ein Blockschaltbild aller an der Einstellung des Anpreßdrucks in der sekundären Ölkammer 12 mitwirkenden Steuerungsalgorithmen, die im Steuergerät 20 realisiert sind.

Die Berechnungseinheit 401 dient der Ansteuerung der Vorwärtskupplung 5a und der Rückwärtskupplung 5b. Der Berechnungsblock 401 berechnet das Stellsignal 37 zur Ansteuerung des Ventils 34. Zu diesem Zweck wird mindestens das Positionssignal 107 des Wählhebels 27 im Block 401 verarbeitet. Der Block 401 erzeugt zwei Statussignale 120 und 121, die den Zustand der Vorwärtskupplung 5a beziehungsweise der Rückwärtskupplung 5b widerspiegeln. Hat beispielsweise das Statussignal 120 für die Vorwärtskupplung 5a den Wert 1, so bedeutet dies, daß die Vorwärtskupplung 5a geöffnet ist. Hat das Statussignal 120 den Wert 2, so bedeutet dies, daß die Vorwärtskupplung 5a schließt. Hat das Statussignal 120 den Wert 3, so bedeutet dies, daß die Vorwärtskupplung 5a geschlossen ist. Gleiches gilt für das Statussignal 121 der Rückwärtskupplung 5b.

Die Berechnungseinheit 402 liefert das Stellsignal 36 der Wandlerüberbrückungskupplung 30. Dazu wird mindestens das Sekundärdrehzahlsignal 104 ausgewertet. Der Block 402 berechnet das Statussignal 123, das den Zustand der Wandlerüberbrückungskupplung 30 charakterisiert. Die Beschreibung der Zustände für das Zustandssignal 120 der Vorwärtskupplung 5a gilt in gleicher Weise für das Zustandssignal 123 der Wandlerüberbrückungskupplung 30.

Die Berechnungseinheit 403 liefert das Stellsignal 39 zur Einstellung der Übersetzung des Variators 6. Dazu werden mindestens das Lastsignal 105 des Motors 1 und das Sekundärdrehzahlsignal 104 verarbeitet. Als Zwischengröße berechnet der Block 403 das Sollprimärdrehzahlsignal 124. Alternativ kann das Signal 124 auch ein Sollmotordrehzahlsignal sein.

Die Berechnungseinheit 404a berechnet das Übersetzungssignal 125 als Quotient aus dem Primärdrehzahlsignal 103 und dem Sekundärdrehzahlsignal 104.

Die Berechnungseinheit 404 bildet das Primärdrehmomentsignal 126, auf dessen Grundlage der Anpreßdruck in der sekundären Ölkammer eingestellt wird. Die Berechnungseinheit 405 ermittelt aus dem Primärdrehmomentsignal 126 das Solldrucksignal 127 für den Anpreßdruck in der sekundären Ölkammer 12.

Die Berechnungseinheit 406 enthält einen PID-Regelalgorithmus, mit dem durch Vergleich des Solldrucksignals 127 und des Istdrucksignals 110 das Stellsignal 38 gebildet wird, welches mit Hilfe des Ventils 14 zur Einstellung des gewünschten Anpreßdrucks in der sekundären Ölkammer 12 führt.

In der Figur 3 ist das Blockschaltbild der Berechnungseinheit 404 dargestellt. Mit dem Kennfeldblock 407 wird aus dem Lastsignal 105 des Motors 1 und dem Motordrehzahlsignal 101 das stationäre Motordrehmomentsignal 128 berechnet. Das dynamische Motordrehmomentsignal 129 ergibt sich aus dem stationären Motordrehmomentsignal 128 minus dem Drehmomentsignal der Pumpe, das durch Multiplikation 408 des gemessenen Istdrucksignals 110 mit einer Konstanten gebildet wird, minus dem Produkt 410 aus dem Gradienten des Motordrehzahlsignals 101 und einer das Trägheitsmoment des Motors 1 repräsentierenden Konstanten.

Der Block 411 liefert das Signal 130. Das ist der Betrag des dynamischen Motordrehmomentsignals 129.

Der Berechnungsblock 412 berechnet das Drehzahlverhältnissignal 131 aus dem Turbinendrehzahlsignal 102 und dem Motordrehzahlsignal 101. Der Kennlinienblock 413 berechnet aus dem Drehzahlverhältnis 131 eine Kennzahl, die mit dem Quadrat des Motordrehzahlsignals 101 multipliziert wird. Das Ergebnis ist das Drehmomentsignal 132 des Drehmomentwandlers 4 bei offener Wandlerüberbrückungskupplung 30.

Der Block 419 vergleicht das Drehzahlverhältnissignal 131 mit einer Konstanten 134. Das resultierende binäre Signal 137 ist logisch wahr, wenn das Drehzahlverhältnis 131 größer ist als die Konstante 134. Andernfalls ist das Signal 137 logisch falsch.

Der Block 420 vergleicht das Drehzahlverhältnissignal 131 mit einer Konstanten 135 in gleicher Weise wie der Block 419. Der Block 421 liefert ebenfalls ein logisches Ausgangssignal. Der Ausgang hat den Wert logisch wahr, wenn das Zustandssignal 123 der Wandlerkupplung nicht den Wert 136 annimmt. Der Wert 136 ist auf 1 gesetzt. Dies bedeutet, daß dann, wenn das Zustandssignal 123 der Wandlerüberbrückungskupplung 30 nicht den Zustand "Kupplung offen" hat, der Ausgang des Blocks 421 logisch wahr ist, andernfalls logisch falsch wird. Den Blöcken 420 und 421 ist ein ODER-Block 422 nachgeschaltet. Dieser liefert ein logisches Signal 138. Dieses ist logisch wahr, wenn das Drehzahlverhältnis 131 am Wandler größer ist als der Wert 135 oder das Zustandssignal 123 der Wandlerüberbrückungskupplung 30 nicht den Zustand "Kupplung offen" anzeigt.

Mit den Schalterblöcken 417 und 418 wird ausgewählt, welchen Wert das Wandlerabtriebsdrehmomentsignal 139 gesetzt wird. Wenn das Signal 138 den Wert logisch falsch hat, dann wird das Signal 139 auf den Wert des Signals 132 gesetzt. Wenn das Signal 138 den Wert logisch wahr hat und das Signal 137 den Wert logisch wahr hat, dann wird das Signal 139 auf den Wert des Signals 130 gesetzt. Andernfalls wird das Signal 139 auf den Wert des größeren der zwei Signale 130 und 132 gesetzt. Zur Auswahl des größeren Signals ist der Block 416 vorhanden. Der Schalterblock 423 liefert das Primärdrehmomentsignal 142 bei betätigter Vorwärtskupplung 5a. Der Zustand des Statussignals 120 der Vorwärtskupplung 5a bestimmt dabei die Höhe des Signals 142. Hat das Statussignal 120 den Wert 1, dann wird das Signal 142 auf den Wert der Konstanten 140 (gleich 0) gesetzt. Hat das Statussignal 120 den Wert 2, das heißt die Kupplung 5a schließt, dann wird das Signal 142 auf den Wert der Summe des Signals 139 und einer Konstanten 141 gesetzt. Dadurch wird der Anpreßdruck in der sekundären Ölkammer beim Schließen der Vorwärtskupplung 5a kurzzeitig erhöht, um einem Durchrutschen des Schubgliederbandes 9 durch Drehmomentenstöße beim Kupplungsschließen entgegenzuwirken. Hat das Statussignal 120 den Wert 3, dann wird das Signal 142 auf den Wert des Signals 139 gesetzt.

Der Schalterblock 426 liefert das Primärdrehmomentsignal 145 bei betätigter Rückwärtskupplung 5b. Der Zustand des Statussignals 121 der Rückwärtskupplung 5b bestimmt dabei die Höhe des Signals 145. Hat das Statussignal 121 den Wert 1, dann wird das Signal 145 auf den Wert der Konstanten 143 (gleich 0) gesetzt. Bei schließender oder geschlossener Rückwärtskupplung 5b muß im Unterschied zur Vorwärtskupplung 5a die Drehmomentverstärkung des Planetensatz 16 bei Rückwärtsfahrt berücksichtigt werden. Dazu dient der Verstärkungsfaktor im Block 427.

Hat das Statussignal 121 den Wert 2, das heißt, daß die Kupplung schließt, dann wird das Signal 145 auf den Wert der Summe des Ergebnisses des Blocks 427 und einer Konstanten 144 gesetzt. Dadurch wird der Anpreßdruck in der sekundären Ölkammer beim Schließen der Rückwärtskupplung 5b kurzzeitig erhöht, um ein Durchrutschen des Schubgliederbandes 9 durch Drehmomentstöße beim Kupplungsschließen entgegenzuwirken. Hat das Statussignal 121 den Wert 3, dann wird das Signal 145 auf den Wert des Ergebnisses von Block 427 gesetzt.

Das Signal 164 bewirkt eine kurzzeitige Anhebung des Anpreßdrucks in der sekundären Ölkammer 12 beim Schließen der Wandlerüberbrückungskupplung 30. Dadurch wird das Schubgliederband 9 vor Drehmomentstößen beim Schließen der Wandlerüberbrückungskupplung 30 geschützt, die zu einem Durchrutschen des Bandes 9 führen könnten. Wenn das Statussignal 123 der Wandlerüberbrückungskupplung 30 den Wert 2 hat, dann wird das Signal 164 auf den Wert der Konstanten 163 gesetzt, andernfalls wird das Signal 164 auf den Wert der Konstantem 162 (gleich 0) gesetzt.

Die Summationsstelle 425 addiert die Signale 142, 145 und 164 zum quasi-stationären Primärdrehmomentsignal 146.

Der Block 430 bildet den Gradienten 147 des Übersetzungssignals 125. Im Block 431 wird der Gradient 147 mit dem Sekundärdrehzahlsignal 104 multipliziert. Das Ergebnis ist ein erstes Signal 150 zur dynamischen Druckanhebung in der sekundären Ölkammer 12. Der Block 432 liefert den Gradienten 148 der Sollprimärdrehzahl 124. Der Block 435 bildet den Gradienten 149 des Sekundärdrehzahlsignals 104. Der Block 436 multipliziert den Gradienten 149 mit dem Übersetzungssignal 125. Das Produkt wird von dem Signal 148 subtrahiert. Das Ergebnis ist ein zweites Signal 151 zur dynamischen Druckanhebung in der sekundären Ölkammer 12. Das Signal 151 liefert eine Information über die voraussichtliche Übersetzungsverstellung des Variators 6 aufgrund der gewünschten Übersetzungsverstellung laut Berechnungseinheit 403. Hingegen liefert das Signal 150 eine Information über die tatsächlich realisierte Übersetzungsverstellung des Variators 6 aufgrund der gemessenen Drehzahlverläufe am Variator 6. Von den Signalen 150 und 151 wird mit dem Block 434 das größere ausgewählt und dem Block 437 mit einer Kennzahl 153 multipliziert. Das Ergebnis ist das Signal 154. Die Kennzahl 153 wird mit dem Kennfeldblock 438 in Abhängigkeit von dem Übersetzungssignal 125 und dem Primärdrehzahlsignal 103 bestimmt.

Mit dem Schalterblock 439 wird bei aktivem ABS- beziehungsweise ABS/ASR-System beziehungsweise Fahrstabilitätssystem ESP der Anpreßdruck in der sekundären Ölkammer 12 erhöht. Das heißt, der Anpreßdruck wird erhöht, wenn ein beginnendes Blockieren der Räder erkannt wird beziehungsweise ein Durchdrehen der Räder beziehungsweise ein Ausbrechen des Fahrzeugs erkannt wird. Wenn das Signal 111 vom ABS- beziehungsweise ABS/ASR-System beziehungsweise ESP-System logisch wahr ist, dann wird das Signal 157 auf den Wert der Konstanten 155 gesetzt, andernfalls wird das Signal 157 auf die Konstante 156 (gleich 0) gesetzt.

Mit dem Block 440 wird das größere der Signale 154 und 157 ausgewählt und dem dynamischen Primärdrehmomentsignal 158 zugewiesen. Die Summationsstelle 441 addiert das quasistationäre Primärdrehmomentsignal 146 und das dynamische Primärdrehmomentsignal 158 zum Primärdrehmomentsignal 126.

In der Figur 4 ist die Berechnung des Solldrucksignals 127 dargestellt. In den Kennfeldblock 442 wird aus dem Primärdrehmomentsignal 126 und dem Übersetzungssignal 125 das Signal 159 gewonnen. Dieses Signal wird in den Dämpfungsblock 443 gefiltert, wobei die Stärke der Filterung bei steigender und fallender Flanke unterschiedlich einstellbar ist. Mit der Summationsstelle 445 wird eine Konstante 161 addiert, die eine Reserve für die Anpressung in der sekundären Ölkammer 12 darstellt. Von dem Ergebnis wird an der Summationsstelle 446 ein von dem Sekundärdrehzahlsignal 104 abhängiger Wert aus dem Kennlinienblock 444 abgezogen. Als Ergebnis erhält man das Solldrucksignal 127 für die Anpressung in der sekundären Ölkammer 12.

Zusammenfassend ist zu sagen, daß im Unterschied zur Berechnung des Anpreßdrucks gemäß dem Stand der Technik folgende Unterschiede besonders herauszuheben sind:
1. Der gewünschte Anpreßdruck wird abhängig von dem Betätigungszustand der Vorwärts- und Rückwärtskupplungen anders berechnet. Im Gegensatz dazu unterscheidet der Stand der Technik nicht den Betätigungszustand der Kupplungen. Insbesondere im Rückwärtsgang wird bei der vorliegenden Erfindung die Übersetzung des Planetensatzes berücksichtigt.
2.Der gewünschte Anpreßdruck wird abhängig von dem Betätigungszustand der Wandlerüberbrückungskupplung 30 berechnet. Bei offener Wandlerkupplung wird das Primärdrehmoment entsprechend den physikalischen Gleichungen des Drehmomentenwandlers aus der Motor- und Turbinendrehzahl berechnet. Diese Berechnungsmethode ist genauer, da das vom Motor zur Verfügung stehende Lastsignal oftmals große Ungenauigkeiten, beispielsweise durch nicht erfaßte Nebenaggregate und Reibungen im Motor, beinhaltet. Diese Ungenauigkeiten führen bei Berechnungsmethoden nach dem Stand der Technik insbesondere beim Stillstand des Fahrzeugs, das heißt bei großer Verstärkung des Drehmomentenwandlers, zu erhöhten Ungenauigkeiten bei der Berechnung des Anpreßdrucks. Dieser ist daher beim Anfahren aus dem Stand zu hoch, wodurch unnötig viel Leistung im Getriebe umgesetzt wird.
   Bei geschlossener Wandlerkupplung wird das Primärdrehmoment aus dem Motorkennfeld berechnet, korrigiert um das Trägheitsmoment des Motors und um die Drehmomentaufnahme der Hydraulikpumpe.
   Bei schließender Wandlerüberbrückungskupplung wird gleitend zwischen den zwei Berechnungsverfahren das Primärdrehmoment umgeschaltet, indem das größere berechnete Primärdrehmoment verwendet wird.
3.Während des Einschaltens der Kupplungen wird der Anpreßdruck erhöht, um mögliche Drehmomentstöße vom Band fernhalten zu können.
4.Während des Schließens der Wandlerüberbrückungskupplung wird der Anpreßdruck erhöht, um mögliche Drehmomentstöße vom Band fernzuhalten.
5.Bei der Berechnung des Primärdrehmoments bei geschlossener Wandlerkupplung wird das von der Pumpe aufgenommene Drehmoment berücksichtigt.
6.Bei Übersetzungsverstellungen zu größeren Übersetzungen hin wird der Anpreßdruck angehoben, um eine schnellere Übersetzungsverstellung zu erzielen und ein Bandrutschen durch einen zu niedrigen Primärdruck zu vermeiden.
7.Bei aktivem ABS und bei aktivem ASR und bei aktivem ESP wird der Anpreßdruck erhöht, um das Band vor großen Drehmomentstößen zu schützen.

## Patentansprüche

1. System zur Einstellung der Spannung eines Umschlingungsteils (9) eines, vorzugsweise stufenlos, in seiner Übersetzung verstellbaren Umschlingungsgetriebes (2), das zusammen mit einem Fahrzeugmotor (1) und wenigstens einer, verschiedene Betriebszustände aufweisenden Kupplung (5a, 5b), die zur Einlegung des Vorwärtsgangs und des Rückwärtsgangs angesteuert wird, und dem Fahrzeugmotor (1) in dem Antriebsstrang des Fahrzeugs angeordnet ist,
- wobei zwischen dem Fahrzeugmotor (1) und dem Umschlingungsgetriebe (2) im Antriebsstrang ein drehmomentverstärkender oder ein drehmomentreduzierender Planetensatz (16) angeordnet ist, der bei eingelegtem Rückwärtsgang in den Antriebsstrang geschaltet wird und
- wobei die Einstellung der Spannung wenigstens abhängig von dem Betriebszustand der Kupplung geschieht.

2. System zur Einstellung der Spannung eines Umschlingungsteils (9) eines, vorzugsweise stufenlos, in seiner Übersetzung verstellbaren Umschlingungsgetriebes (2), das zusammen mit einem Fahrzeugmotor (1) und einem Drehmomentenwandler (4), der durch Schließen einer Wandlerüberbrückungskupplung (30) überbrückt werden kann, und dem Fahrzeugmotor (1) in dem Antriebsstrang des Fahrzeugs angeordnet ist, wobei
- eine den Schlupf des Drehmomentenwandlers repräsentierende Schlupfgröße (131) ermittelt wird,
- eine das Motorausgangsmoment repräsentierende Motormomentengröße (128) ermittelt wird, **dadurch gekennzeichnet, daß**
- eine Momentengröße (126), die das am Eingang des Umschlingungsgetriebes (2) wirkende Moment repräsentiert,
-- bei geöffneter Wandlerüberbrückungskupplung (30) durch eine erste Ermittlung wenigstens abhängig von der ermittelten Schlupfgröße (131) ermittelt wird, und
-- bei geschlossener Wandlerüberbrückungskupplung (30) durch eine zweite Ermittlung wenigstens abhängig von der ermittelten Motormomentengröße (128) ermittelt wird, und
- die Einstellung der Spannung wenigstens abhängig von dem Betriebszustand der Kupplung und abhängig von der ermittelten Momentengröße (126) geschieht.

3. System nach Anspruch 1 oder 2, **dadurch gekennzeichnet, daß** die Einstellung der Spannung durch die Einstellung eines hydraulischen Drucks geschieht und die Einstellung des Drucks wenigstens abhängig von dem Betriebszustand der Kupplung geschieht, wobei insbesondere vorgesehen ist, daß das Umschlingungsgetriebe eine Antriebsseite und eine Abtriebsseite aufweist, die im wesentlichen die Form von Kegelscheiben besitzen und als Umschlingungsteil (9) wenigstens ein Band, vorzugsweise ein Schubgliederband, oder ein Riemen oder eine Kette zwischen Scheibenpaaren, die Antriebs- und die Abtriebsseite darstellen, eingespannt ist und durch die Einstellung des hydraulischen Drucks der Anpreßdruck wenigstens einer Kegelscheibe und dem Umschlingungsteil (9) eingestellt wird.

4. System nach Anspruch 1 oder 2, **dadurch gekennzeichnet, daß** die Kupplungen (5a, 5b, 30) als Betriebszustände (121) wenigstens den geöffneten und den geschlossenen Zustand einnehmen, wobei vorzugsweise ein weiterer Betriebszustand während des Schließens der Kupplungen vorliegt.

5. System nach Anspruch 1 und 4, **dadurch gekennzeichnet, dass** die Kupplung als eine Vorwärtskupplung (5a) und eine Rückwärtskupplung (5b) ausgebildet ist und die Spannung des Umschlingungsteils in Reaktion auf ein Schließen der Rückwärtskupplung (5b) erhöht oder verringert wird.

6. System nach Anspruch 2, **dadurch gekennzeichnet, dass** während des Schließens der Wandlerüberbrückungskupplung (30) als Momentengröße (126) der Maximalwert aus der ersten und zweiten Ermittlung ausgewählt wird.

7. System nach Anspruch 4, **dadurch gekennzeichnet, dass** während des Schließens der Kupplungen (5a, 5b, 30) die Spannung des Umschlingungsteils (9) gegenüber der Spannung im vorhergehenden Betriebszustand erhöht wird.

8. System nach Anspruch 2, **dadurch gekennzeichnet, dass** die Einstellung der Spannung des Umschlingungsteils (9) hydraulisch geschieht und eine durch den Fahrzeugmotor (1) angetriebene hydraulische Pumpe (139) vorgesehen ist und die Ermittlung der das Motorausgangsmoment repräsentierenden Motormomentengröße (128) abhängig von einer den Betriebszustand der Pumpe repräsentierenden Druckgröße (110) geschieht.

9. System nach Anspruch 1 oder 2, **dadurch gekennzeichnet, dass** die Einstellung der Spannung des Umschlingungsteils (9) weiterhin abhängig davon geschieht, ob eine Verstellung der Übersetzung des Umschlingungsgetriebes (2) zu größeren oder zu kleineren Übersetzungen geschieht, wobei insbesondere vorgesehen ist, dass die Spannung während einer Verstellung zu größeren Übersetzungen gegenüber der Einstellung einer im wesentlichen konstanten Übersetzung erhöht wird.

10. System nach Anspruch 1 oder 2, **dadurch gekennzeichnet, dass** das Fahrzeug ein Antiblockierregelsystem und/oder ein Antriebsschlupfregelsystem und/oder ein Fahrstabilitätsregelsystem (41) aufweist, mittels dem im aktivierten Zustand dieser Regelsysteme eine an den Fahrzeugrädern wirkende Bremskraft modifiziert werden kann, und die Einstellung der Spannung des Umschlingungsteils (9) weiterhin abhängig von der Aktivierung eines solchen Regelsystems geschieht.

## Claims

1. System for setting the tension of a wrapped-around part (9) of a wrap-around gear mechanism (2) which preferably has an infinitely adjustable transmission ratio and is arranged in the drive train of the vehicle together with a vehicle engine (1) and at least one clutch (5a, 5b) which has various operating states and is actuated in order to engage the forward gear and the reverse gear,
- a planetary set (16) which amplifies the torque or reduces the torque being arranged between the vehicle engine (1) and the wrap-around gear mechanism (2) in the drive train, said planetary set (16) being connected into the drive train when the reverse gear is engaged, and
- the tension being set at least as a function of the operating state of the clutch.

2. System for setting the tension of a wrapped-around part (9) of a wrap-around gear mechanism (2) which preferably has an infinitely adjustable transmission ratio and is arranged in the drive train of the vehicle together with a vehicle engine (1) and a torque converter (4) which can be bypassed by closing a torque converter lockup clutch (30),
- a slip variable (131) which represents the slip of the torque converter being determined,
- an engine torque variable (128) which represents the engine output torque being determined,
**characterized in that**
- a torque variable (126) which represents the torque acting at the input of the wrap-around gear mechanism (2)
-- is determined by a first determination at least as a function of the determined slip variable (131) when the torque converter lockup clutch (30) is opened, and
-- is determined by a second determination at least as a function of the determined engine torque variable (128) when the torque converter lockup clutch (30) is closed, and
- the tension is set at least as a function of the operating state of the clutch and as a function of the determined engine variable (126).

3. System according to Claim 1 or 2, **characterized in that** the tension is set by setting a hydraulic pressure, and the pressure is set at least as a function of the operating state of the clutch, there being in particular provision for the wrap-around gear mechanism to have a drive end and an output end which are essentially in the form of bevel discs and, as wrapped-around part (9), for at least one belt, preferably a pushing-member belt, or a strap or a chain to be clamped between pairs of disks which represent the drive end and the output end, and the pressing force of at least one bevel disc against the wrapped-around part (9) is set by setting the hydraulic pressure.

4. System according to Claim 1 or 2, **characterized in that** the clutches (5a, 5b, 30) assume, as operating states (121), at least the opened state and the closed state, preferably a further operating state being present while the clutches are closing.

5. System according to Claims 1 and 4, **characterized in that** the clutch is embodied as a forward clutch (5a) and a reverse clutch (5b), and the tension of the wrapped-around part is increased or reduced in reaction to closing of the reverse clutch (5b).

6. System according to Claim 2, **characterized in that** the maximum value from the first and second determination is selected as the torque variable (126) during the closing of the torque converter lockup clutch (30).

7. System according to Claim 4, **characterized in that** the tension of the wrapped-around part (9) is increased in comparison with the tension in the preceding operating state during the closing of the clutches (5a, 5b, 30).

8. System according to Claim 2, **characterized in that** the tension of the wrapped-around part (9) is set hydraulically, and a hydraulic pump (139) which is driven by the vehicle engine (1) is provided, and the engine torque variable (128) which represents the engine output torque is determined as a function of a pressure variable (110) which represents the operating state of the pump.

9. System according to Claim 1 or 2, **characterized in that** the tension of the wrapped-around part (9) is also set as a function of whether the transmission ratio of the wrap-around gear mechanism (2) is adjusted so as to result in larger or smaller transmission ratios, there being in particular provision for the tension to be increased during an adjustment so as to form larger transmission ratios in comparison with the setting of an essentially constant transmission ratio.

10. System according to Claim 1 or 2, **characterized in that** the vehicle has an antilock brake mechanism and/or a traction control mechanism and/or a driving stability control system (41), by means of which a braking force which acts on the vehicle wheels can be modified in the activated state of these control systems, and the tension of the wrapped-around part (9) is also set as a function of the activation of such a control system.

## Revendications

1. Système pour le réglage de la tension d'une courroie (9) d'une transmission à courroie (2), de préférence à variation continue, à rapport de transmission réglable, qui est montée dans la chaîne cinématique du véhicule avec un moteur de véhicule (1) et au moins un embrayage (5a, 5b) pouvant prendre différents états de fonctionnement, qui est commandé pour l'enclenchement de la marche avant et de la marche arrière et avec le moteur de véhicule (1), dans lequel
- entre le moteur (1) du véhicule et la transmission à courroie (2), dans la chaîne cinématique, un train épicycloïdal multiplicateur de couple ou réducteur de couple (16), est mis en action dans la chaîne cinématique lorsque la marche arrière est enclenchée, et
- le réglage de la tension s'effectue au moins en fonction de l'état de fonctionnement de l'embrayage.

2. Système pour le réglage de la tension d'une courroie (9) d'une transmission à courroie (2), de préférence à variation continue, à rapport de transmission réglable, qui est montée dans la chaîne cinématique du véhicule, avec un moteur de véhicule (1) et un convertisseur de couple (4) qui peut être court-circuité par la fermeture de l'embrayage (30) de court-circuit du convertisseur de couple, et avec le moteur de véhicule (1), dans lequel
- on détermine une grandeur de glissement (131) qui représente le glissement du convertisseur de couple,
- on détermine une valeur du couple de moteur (128) qui représente le couple de sortie du moteur,
**caractérisé en ce qu'**
- on détermine une valeur de couple (126) qui représente le couple agissant à l'entrée de la transmission à élément enroulé (2),
- lorsque l'embrayage de court-circuit du convertisseur de couple (30) est desserré, par une première détermination exécutée au moins en fonction de la valeur de glissement obtenue (131), et
- lorsque l'embrayage de court-circuit du convertisseur de couple (30) est serré, par une deuxième détermination exécutée au moins en fonction de la valeur de couple de moteur obtenue (128) et
- le réglage de la tension s'effectue au moins en fonction de l'état de fonctionnement de l'embrayage et en fonction de la valeur de couple obtenue (126).

3. Système selon la revendication 1 ou 2,
**caractérisé en ce que**
le réglage de la tension s'effectue par le réglage d'une pression hydraulique et le réglage de la pression s'effectue au moins en fonction de l'état de fonctionnement de l'embrayage, alors qu'en particulier la transmission à courroie présente un côté d'entrée et un côté de sortie qui possèdent sensiblement la forme de poulies coniques et que comme courroie (9), au moins une bande, de préférence une bande à maillons de poussée ou une courroie ou une chaîne est tendue entre les paires de poulies qui représentent le côté d'entrée et le côté de sortie, la pression d'application d'au moins une poulie conique et de la courroie (9) étant réglée par le réglage de la pression hydraulique.

4. Système selon la revendication 1 ou 2,
**caractérisé en ce que**
les embrayages (5a, 5b, 30) prennent, comme états de fonctionnement au moins l'état desserré et l'état serré, alors qu'un autre état de fonctionnement est pris de préférence pendant le serrage des embrayages.

5. Système selon la revendication 1 et 4,
**caractérisé en ce que**
l'embrayage est constitué par un embrayage de marche avant (5a) et un embrayage de marche arrière (5b) et la tension de la courroie est augmentée ou diminuée en réaction à un serrage de l'embrayage de marche arrière (5b).

6. Système selon la revendication 2,
**caractérisé en ce que**
la valeur maximale des résultats des première et deuxième détermination est sélectionnée comme valeur de couple (126) pendant la fermeture de l'embrayage de court-circuit du convertisseur de couple (30).

7. Système selon la revendication 4,
**caractérisé en ce que**,
pendant la fermeture des embrayages (5a, 5b, 30), la tension de la courroie (9) est augmentée comparativement à la tension présente dans l'état de fonctionnement précédent.

8. Système selon la revendication 2,
**caractérisé en ce que**
le réglage de la tension de la courroie (9) s'effectue hydrauliquement à l'aide d'une pompe hydraulique (139) entraînée par le moteur (1) du véhicule, et la valeur de couple de moteur (128) qui représente le couple de sortie du moteur est déterminée en fonction d'une valeur de pression (110) qui représente l'état de fonctionnement de la pompe.

9. Système selon la revendication 1 ou 2,
**caractérisé en ce que**
le réglage de la tension de la courroie (9) s'effectue en outre en fonction du fait qu'une modification du rapport de la transmission à courroie (2) donne des rapports plus grands ou plus petits, alors qu'en particulier la tension est augmentée pendant une modification qui donne des rapports supérieurs au réglage d'un rapport sensiblement constant.

10. Système selon la revendication 1 ou 2,
**caractérisé en ce que**
le véhicule comprend un système de régulation anti-blocage et/ou un système de régulation du patinage en propulsion et/ou un système de régulation de la stabilité de marche, et une force de freinage agissant sur les roues du véhicule peut être modifiée au moyen de celui de ces systèmes de régulation qui est à l'état activé, le réglage de la tension de la courroie (9) s'effectuant en outre en fonction de l'activation d'un tel système de régulation.
